# EUROPÄISCHE PATENTSCHRIFT

(11) **EP 3 094 542 B1**
(45) Veröffentlichungstag und Bekanntmachung des Hinweises auf die Patenterteilung: **18.04.2018**
(21) Anmeldenummer: 14802902.8
(22) Anmeldetag: 27.11.2014
(51) Int. Cl.: B62D 15/02

(54) **VERFAHREN ZUM AUTONOMEN PARKEN EINES FAHRZEUGS, FAHRERASSISTENZVORRICHTUNG ZUR DURCHFÜHRUNG DES VERFAHRENS, SOWIE FAHRZEUG MIT DER FAHRERASSISTENZVORRICHTUNG**
METHOD FOR AUTONOMOUS PARKING OF A VEHICLE, DRIVER ASSISTANCE DEVICE FOR CARRYING OUT THE METHOD, AND VEHICLE COMPRISING THE DRIVER ASSISTANCE DEVICE
PROCÉDÉ DE STATIONNEMENT AUTONOME D'UN VÉHICULE AUTOMOBILE, DISPOSITIF D'ASSISTANCE À LA CONDUITE POUR METTRE EN UVRE LE PROCÉDÉ ET VÉHICULE COMPORTANT LE DISPOSITIF D'ASSISTANCE À LA CONDUITE

(30) Priorität: 15.01.2014 DE 102014200611
(43) Veröffentlichungstag der Anmeldung: 23.11.2016
(73) Patentinhaber: Robert Bosch GmbH, 70442 Stuttgart (DE)
(72) Erfinder: HERING, Michael, 71229 Leonberg (DE); SCHNEIDER, Marcus, 71642 Ludwigsburg (DE)
(86) Internationale Anmeldenummer: PCT/EP2014/075738
(87) Internationale Veröffentlichungsnummer: WO 2015/106867

(56) Entgegenhaltungen:
- DE-A1-102008 051 982
- DE-A1-102010 008 324
- DE-A1-102012 008 858
- JP-A- 2005 041 433
- JP-A- 2006 027 427
- US-A1- 2013 085 637

## Beschreibung

### Stand der Technik

Halbautomatische Einparksysteme sind bereits seit einigen Jahren in Serienproduktion. Bei derartigen Systemen wird üblicherweise das Fahrzeug an Parklücken entlang geführt. Das Fahrzeug erkennt mögliche Parklücken mittels seitlich verbauter Sensoren (z.B. Ultraschallsensoren). Bei Aktivierung des Einparksystems durch den Bediener, beispielsweise durch Einlegen des Rückwärtsgangs, übernimmt das System die Kontrolle über das Lenkrad und steuert das Fahrzeug in die Parklücke. Dabei übernimmt der Bediener die Längssteuerung, also das Beschleunigen, sowie das Betätigen der Bremse. Als weitere Ausbaustufe sind außerdem Einparksysteme bekannt, bei denen der Bediener nicht mehr beschleunigen oder bremsen muss. Dies übernimmt das Einparksystem, z.B. durch direkten Zugriff auf die Längsführungsaktuatorik des Fahrzeugs (Bremse, Motorsteuerung).

Eine weitere bekannte Weiterentwicklung derartiger Systeme sieht vor, dass der Bediener das Fahrzeug vor Beginn des Einparkvorgangs das Fahrzeug verlässt und mittels einer Fernsteuerung - beispielsweise einem Mobiltelefon mit spezieller Software, welches drahtlos mit dem Einparksystem im Fahrzeug kommuniziert - von Außerhalb des Fahrzeugs den automatischen Einparkvorgang startet und aufrecht erhält, bzw. beendet.

In all diesen bekannten Systemen kontrolliert das Einparksystem mittels der verbauten Umfeldsensorik (z.B. Ultraschallsensoren, Rückfahrkamera) mehr oder weniger weit vorausschauend (übliche Reichweiten liegen zwischen 50cm und 5m), ob sich zuvor nicht detektierte Objekte in den Fahrschlauch bewegen und reagiert unter Umständen mit einem Bremsvorgang.

Neuere Entwicklungen befassen sich bereits mit Einparksystemen, welche selbsttätig lernen, wo sich ein bestimmter Parkplatz befindet, beispielsweise die heimische Garage. Im Anschluss an den Einlernvorgang, der z.B. durch Festlegen der GPS-Position des Zielparkplatzes oder durch Übermittlung von Koordinaten einer Zielposition an das Fahrzeug erfolgen kann, braucht der Bediener das Fahrzeug nur noch in der Nähe der zuvor eingelernten Parkposition abstellen. Nach dem Aussteigen kann der Bediener das Einparksystem mittels der Fernbedienung aktivieren, woraufhin sich das Fahrzeug autonom zu der eingelernten Parkposition bewegt (Stichwort: "Garagenparken" oder "Valet-Parking"). Mittels einer geeigneten Umfeldsensorik (z.B. Kameras, Ultraschallsensoren, Laserscanner, etc.) erkennt das Fahrzeug selbständig zuvor unbekannte Hindernisse, bzw. findet die genaue Parkposition, beispielsweise anhand von Bodenmarkierung, bzw. anhand von gegebenenfalls vorhandenen Garagenwänden. Wichtig ist dabei die Nutzung der Umfeldsensorik, da der besondere Vorteil derartiger Systeme darin liegt, dass der Bediener sich nicht um die Ungenauigkeiten eines GPS-Systems (ca. 1 bis 5m), oder um die genaue Einhaltung einer Startposition vor Beginn des automatischen Einparkvorgangs kümmern muss.

So ist beispielsweise aus dem Internet-Artikel "Nie mehr Stress bei der Parkplatzsuche" vom 29.01.2013 (http://www.dlr.de/dlr/desktopdefault.aspx/tabid-10081/151_read-6186/) über die aktuelle Forschung des DLR zum sogenannten "Valet-Parking" bekannt, die Erfassung von freien Parkflächen mittels einer fest installierten HD-Kamera vorzusehen, wobei die Information drahtlos an ein Fahrzeug übermittelt wird. Der Bediener bestätigt per Knopfdruck auf seinem Smartphone den Zielort und das Fahrzeug fährt automatisch zu dem zugewiesenen Parkplatz. Bei diesem Verfahren wird somit eine externe, bereits vorhandene Infrastruktur (HD-Kamera beispielsweise im Parkhaus) genutzt, um freie Parkflächen zu detektieren. Ferner ist das Fahrzeug zum autonomen Fahren und Parken eingerichtet.

Die DE 10 2012 008 858 A1 beschreibt ein Verfahren, bei dem der Bediener sich mit seinem Fahrzeug an die gewünschte Zielposition bewegt, diese Zielposition dann vom Fahrzeug gespeichert wird, und anschließend beispielsweise der Bediener einen anderen Ort ansteuert. Nach dem Verlassen des Fahrzeugs kann der Bediener durch drahtlose Kommunikationsmittel dem Fahrzeug den Befehl geben, die zuvor ermittelte Zielposition (Parkfläche) selbständig anzufahren und dort einzuparken.

Weiterhin ist aus der DE 10 2009 021 014 A1 bekannt, dass ein sich innerhalb beispielsweise eines Parkhauses bewegendes Fahrzeug freie Parkflächen erfasst und diese Information drahtlos anderen Fahrzeugen zur Verfügung stellt. Aufgrund der übermittelten Position der freien Parkfläche und des Navigationssystems im Fahrzeug berechnet das Fahrzeug den Sollkurs zu der freien Parkfläche, wobei hier kein autonomes Einparken erwähnt ist, vielmehr muss der Bediener den freien Parkplatz selbst ansteuern.

Die US 2013/085637 beschreibt ein Fahrassistenzverfahren bei dem in einer Lernphase eine Parkposition und ein Weg von einer Startposition zu der Parkposition aufgezeichnet werden. In einer Ausführungsphase kann das Fahrzeug autonom die gespeicherte Parkposition ansteuern, wobei die zuvor aufgezeichneten Informationen als Referenz verwendet werden und mit aktuellen Informationen verglichen werden.

Aus der JP 2006 027427 A ist bekannt, dass Bilder einer externen, mobilen Kamera an ein Fahrzeug geschickt werden können und innerhalb des Fahrzeugs auf einem Bildschirm dargestellt werden können. Dies soll dazu dienen die Sicherheit beim Rückwärtsfahren zu erhöhen, da der Fahrer durch die Kameraaufnahmen Informationen über einen ansonsten nicht einsehbaren Bereich in der Umgebung des Fahrzeugs erhält.

### Offenbarung der Erfindung

Es wird ein Verfahren zur Durchführung eines autonomen Parkvorgangs eines Fahrzeugs vorgeschlagen, wobei zwischen einem Mobilgerät eines sich innerhalb oder außerhalb des Fahrzeugs befindenden Bedieners und dem Fahrzeug eine Kommunikationsverbindung besteht, über welche zumindest ein Befehl zur Aktivierung des autonomen Parkvorgangs des Fahrzeugs übertragen wird, wobei sich das Fahrzeug nach der Aktivierung des autonomen Parkvorgangs autonom von einer Startposition zu einer Zielposition bewegt. Erfindungsgemäß ist vorgesehen, dass
a) vor Beginn des autonomen Parkvorgangs des Fahrzeugs charakteristische Umfeldinformationen der Zielposition über die Kommunikationsverbindung an das Fahrzeug gesendet und in einer hierfür geeigneten Vorrichtung des Fahrzeugs gespeichert werden,
b) vor und/oder während des autonomen Parkvorgangs ein Vergleich zwischen von einem Sensorsystem des Fahrzeugs erfassten aktuellen Umfeldinformationen und den charakteristischen Umfeldinformationen der Zielposition erfolgt und eine Trajektorie des autonomen Parkvorgangs abhängig von dem Vergleich berechnet wird.

Die Erfindung betrifft außerdem eine Fahrerassistenzvorrichtung, die mit Steuer- und Sensoreinrichtungen eines Fahrzeugs verbindbar ist und die dazu eingerichtet ist, ein erfindungsgemäßes Verfahren durchzuführen. Außerdem betrifft die Erfindung ein Fahrzeug mit einer derartigen Fahrerassistenzvorrichtung, insbesondere ein Automobil.

Gemäß der Erfindung ist demnach vorgesehen, dass ein autonomes Einparken eines Fahrzeugs erfolgt, indem aktuelle Umfeldinformationen des Fahrzeugs mit zuvor übermittelten, charakteristischen Umfeldinformationen, die die angestrebte Zielposition des Parkvorgangs repräsentieren, verglichen werden. Mittels des Vergleichsergebnisses wird eine Trajektorie berechnet, entlang der sich das Fahrzeug bewegt. Die Trajektorie wird derart berechnet, dass durch die Bewegung entlang der Trajektorie eine möglichst hohe Übereinstimmung der aktuellen Umfeldinformationen des Fahrzeugs mit den zuvor übermittelten, charakteristischen Umfeldinformationen der Zielposition erzielt wird.

Unter charakteristischen Umfeldinformationen der Zielposition werden insbesondere messbare Umfeldmerkmale, wie beispielsweise Parkplatzmarkierungen oder Parkplatzbegrenzungen wie Mauern, Pfosten oder parkende Fahrzeuge verstanden. Außerdem können die charakteristischen Umfeldinformationen der Zielposition auch weitere Informationen beinhalten, die die eindeutige Zuordnung der Zielposition ermöglichen, wie zum Beispiel Informationen über Abstände, Form, Größe oder Farbinformation von Objekten in der Umgebung der Zielposition. Diese Informationen können beispielsweise durch bekannte Methoden der digitalen Bildverarbeitung aus gemessenen Daten ermittelt werden.

Erfindungsgemäß umfassen die charakteristischen Umfeldinformationen der Zielposition zumindest ein digitales Bild, insbesondere eine digitale Fotographie der Zielposition. Die charakteristischen Umfeldinformationen liegen demnach als Bildinformationen in Form von Grau- oder Farbwerten für die Bildpunkte des digitalen Bilds vor, wobei durch Methoden der digitalen Bildverarbeitung, wie beispielsweise Kantenerkennung, weitere Information beispielsweise über Parkplatzbegrenzungen, abgeleitet werden können. Diese Ausführung hat den Vorteil, dass die charakteristischen Umfeldinformationen der Zielposition mit einfachen und breit verfügbaren Mitteln, wie Digitalkameras, die in vielen Mobilgeräten wie Fotohandys, Smartphones oder Tablet-Computern eingebaut sind, erfasst werden können.

Weiter bevorzugt umfasst das Sensorsystem zur Erfassung der aktuellen Umfeldinformationen des Fahrzeugs einen Bildsensor, insbesondere eine Digitalkamera. Der Bildsensor ist dabei insbesondere ausgebildet, in regelmäßigen Zeitabständen (Video) digitale Bilder der Umgebung des Fahrzeugs aufzunehmen.

Bevorzugt werden die charakteristischen Umfeldinformationen von dem Bediener mittels einer mobilen Vorrichtung erfasst und an das Fahrzeug über die Kommunikationsverbindung übermittelt. Besonders bevorzugt ist die Kommunikationsverbindung eine drahtlose Verbindung.

Erfindungsgemäß umfassen die charakteristischen Umfeldinformationen der Zielposition außerdem die Koordinaten der Zielposition und/oder die Koordinaten der Position an der das digitale Bild der Zielposition aufgenommen wurde. Die Koordinaten liegen in Form von GPS-Koordinaten vor. Dadurch wird in vorteilhafter Weise ermöglicht, dass die charakteristischen Umfeldinformationen der Zielposition und/oder die von dem Sensorsystem des Fahrzeugs erfassten aktuellen Umfeldinformationen vor dem Vergleich abhängig von ihrer relativen Position transformiert werden können. Insbesondere wenn die Umfeldinformationen als digitale Bilddaten vorliegen, kann eine Anpassung der Bildgröße, sowie eine Berücksichtigung der gegebenenfalls unterschiedlichen Aufnahmewinkel erfolgen, wodurch wiederum eine bessere Vergleichbarkeit der Umfeldinformationen erreicht wird. Besonders bevorzugt wird eine Relativposition zwischen den GPS-Koordinaten der Position an der das digitale Bild der Zielposition aufgenommen wurde und den aktuellem GPS-Koordinaten des Fahrzeugs ermittelt und abhängig von dieser Relativposition eine Bildtransformation zwischen dem digitalen Bild der Zielposition und dem von dem Sensorsystem des Fahrzeugs erfassten Bild der Umgebung durchgeführt. Damit kann vorteilhaft der Vergleichsalgorithmus für den Bildvergleich vereinfacht, die Fehlerwahrscheinlichkeit verringert, und dadurch die Verfügbarkeit einer erfindungsgemäßen Fahrerassistenzvorrichtung erhöht werden.

Weiter bevorzugt kann aus den von einem Sensorsystem des Fahrzeugs erfassten aktuellen Umfeldinformationen auf Hindernisse im Umfeld des Fahrzeugs geschlossen werden. Falls das Fahrzeug beim Befahren der zuvor berechneten Trajektorie mit dem Hindernis kollidieren würde kann der autonome Parkvorgang unterbrochen oder pausiert oder die Trajektorie entsprechend angepasst werden, um eine Kollision des Fahrzeugs mit dem Hinderniss zu vermeiden. Zur Erfassung des Hindernisses kann es das Sensorsystem verwendet werden, mit dem auch die aktuellen Umfeldinformationen für den erfindungsgemäß vorgesehenen Vergleich mit den charakteristischen Umfeldinformationen der Zielposition erfasst werden. Alternativ oder zusätzlich können zur Hinderniserkennung weitere Sensoren, wie beispielsweise Ultraschall- oder Radarsensoren eingesetzt werden.

Bevorzugt werden die charakteristischen Umfeldinformationen der Zielposition auf einer Anzeigevorrichtung des Fahrzeugs und/oder auf einer Anzeige des sozusagen als Fernbedienung wirkenden Mobilgeräts angezeigt, so dass sowohl im Fall das der Bediener oder ein anderer Passagier während des autonomen Parkvorgangs im Fahrzeug verbleibt als auch im Fall, dass der Bediener den autonomen Parkvorgang von außerhalb des Fahrzeugs überwacht, Informationen über die Zielposition angezeigt werden.

Gemäß einer besonders bevorzugten Ausführung der Erfindung wird demnach vorgeschlagen, einen autonomen Parkvorgang dadurch durchzuführen, dass ein Bediener an dem gewünschten Einparkort mit einem entsprechend mit einer digitalen Kamera ausgestatteten Mobilgerät, wie beispielsweise einem Smartphone, ein digitales Bild der Zielposition (Parkfläche) aufnimmt. Dieses Bild, insbesondere zusammen mit einer GPS-Information über den Ort der Bildaufnahme, wird dem Fahrzeug drahtlos übermittelt. Mittels einem im Fahrzeug verbauten Umfelderfassungssystem, zum Beispiel einem Bilderfassungssystem wie Front- oder Heck-, oder Seitenkameras oder Kombinationen davon, werden aktuelle Umfeldinformationen erfasst, die insbesondere als Umgebungsbild vorliegen. Anhand eines Vergleichs der von dem Mobilgerät übermittelten charakteristischen Umfeldinformationen der Zielposition mit den aktuell erfassten Umfeldinformationen wird eine Trajektorie zur Zielposition ermittelt und ein autonomer Parkvorgang entlang dieser Trajektorie durchgeführt.

Kurze Beschreibung der Zeichnungen
Figur 1 stellt schematisch eine Einparksituation dar, bei der ein erfindungsgemäßes Verfahren zur Durchführung eines autonomen Parkvorgangs eines Fahrzeugs zum Einsatz kommt.
Figur 2 zeigt beispielhaft eine Anzeige eines Mobilgerätes mit charakteristischen Umfeldinformationen einer Zielposition in Form eines mit einer Kamera des Mobilgerätes aufgenommenen digitalen Bilds.
Figur 3 zeigt beispielhaft den Vergleich zwischen von einem Sensorsystem des Fahrzeugs erfassten Umfeldinformationen und den charakteristischen Umfeldinformationen der Zielposition, wobei die Umfeldinformationen jeweils in Form von Bilddaten vorliegen.
Figur 4 zeigt ein zweites Beispiel einer Anzeige eines Mobilgerätes mit charakteristischen Umfeldinformationen einer Zielposition, wobei mehrere mögliche Parkpositionen zur Auswahl stehen.

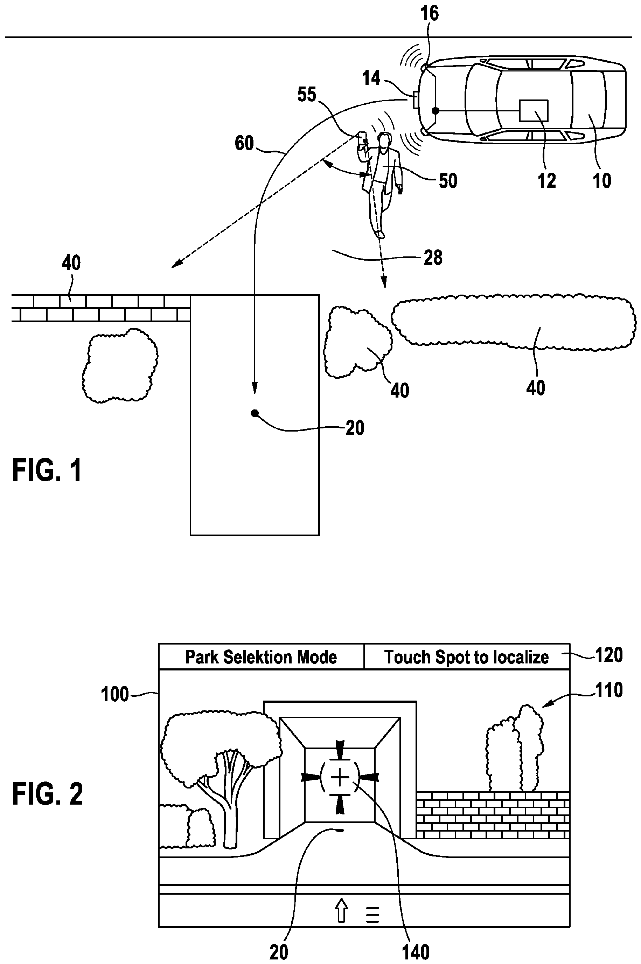

In der in Figur 1 schematisch dargestellten Situation, hält ein Bediener 50 das Fahrzeug 10 an einer Startposition in der Nähe der Zielposition 20 an und steigt aus. Mit einem entsprechend ausgestatteten Mobilgerät 55, wie beispielsweise einem Smartphone oder einem Tablet-Computer, nimmt der Bediener 50 ein digitales Bild von der Zielposition 20 in einem Winkelbereich 28 vor der Kamera des Mobilgeräts 55 auf. Das aufgenommene digitale Bild enthält die charakteristischen Umfeldinformationen der Zielposition 20. Nachdem der Bediener 50 die Zielposition 20 festgelegt und hat, überträgt das Mobilgerät 55 die charakteristischen Umfeldinformationen drahtlos, beispielsweise per WLAN, Bluetooth oder einer anderen drahtlosen Übertragungstechnik an die Steuervorrichtung 12 einer erfindungsgemäß ausgebildeten Fahrerassistenzvorrichtung des Fahrzeugs 10 und werden dort gespeichert. Die Steuervorrichtung 12 erfasst mittels einer Bilderfassungsvorrichtung 14, die beispielsweise als Videokamera ausgebildet ist, den Bereich um das Fahrzeug 10. Durch Vergleich des übertragenen digitalen Bilds der Zielposition 20 mit dem aktuell durch die Bilderfassungsvorrichtung 14 erfassten Umgebungsbild wird eine Relativposition zwischen dem Fahrzeug 10 und der Zielposition 20 berechnet und eine Einparktrajektorie 60 ermittelt. Das Fahrzeug 10 bewegt sich anschließend autonom entlang der Trajektorie 60 in Richtung der Zielposition 20. Während des autonomen Parkvorgangs überwacht die Fahrerassistenzvorrichtung des Fahrzeugs 10 die direkte Umgebung um das Fahrzeug 10 mittels der Bilderfassungsvorrichtung 14, wobei zusätzlich weitere Umfeldsensoren 16 wie z.B. Ultraschallsensoren oder Radarsensoren eingesetzt werden können. Aus den so erfassten Umfeldinformationen können Hindernisse 40 in der Umgebung sowie die finale Zielposition 20 ermittelt werden. Bevorzugt werden während des autonomen Parkvorgangs weiterhin in regelmäßigen Zeitabständen aktuelle Umfeldinformationen durch die Bilderfassungsvorrichtung 14 aufgenommen und mit den gespeicherten charakteristischen Umfeldinformationen der Zielposition 20 verglichen. Damit kann die Trajektorie 60 während des autonomen Parkvorgangs weiter verfeinert, korrigiert und plausibilisiert werden.

Figur 2 zeigt beispielhaft eine Anzeige 100 eines Mobilgerätes 55 mit charakteristischen Umfeldinformationen einer Zielposition 20 in Form eines mit einer Kamera des Mobilgerätes 55 aufgenommenen digitalen Bilds 110. Um das digitale Bild 110 der Zielposition 20 zu erfassen, dreht der Bediener 50 das Mobilgerät 55 in Richtung der Zielposition 20, so dass diese auf der Anzeige 100 des Mobilgeräts 55 sichtbar ist. Mittels einer über das Originalbild 110 überblendeten Zielmarkierung 140, welche auf die Zielposition 20 zeigen soll, wird die Zielposition 20 fixiert. Die Zielposition 20 wird entweder an einer fixen Position auf der Anzeige 100 angezeigt, oder kann durch den Bediener, z.B. durch Berühren d der Anzeige 100 festgelegt werden. Bevorzugt erkennt das System, beispielsweise durch Mustervergleich, dass es sich bei der Zielposition 20 um eine Garage handelt. Alternativ kann der Bediener dies z.B. durch einen entsprechenden Button einer Bedienleiste 120 mitteilen.

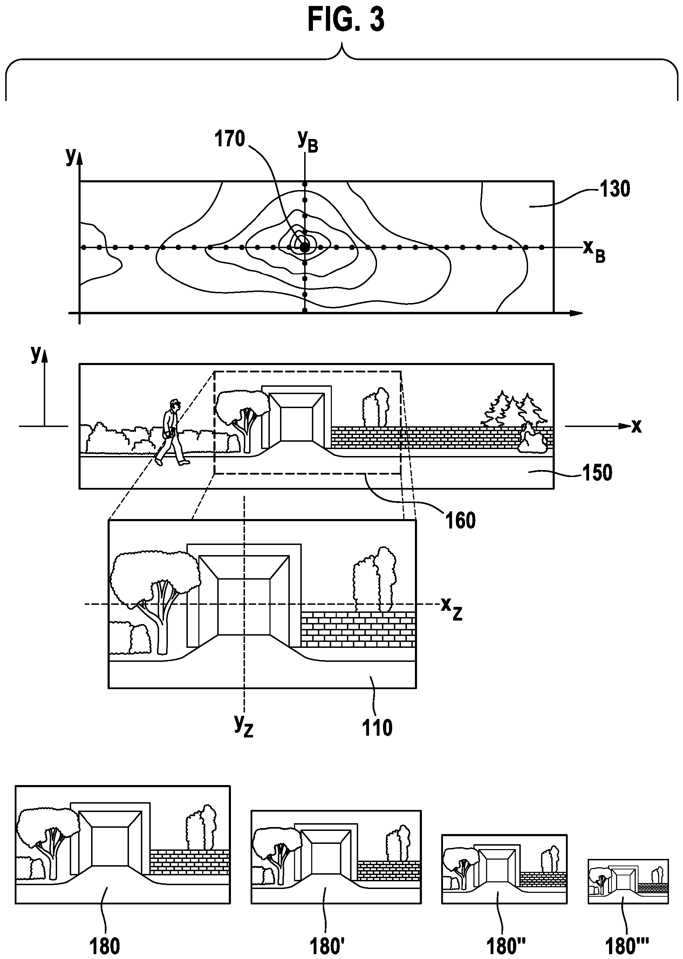

In Figur 3 ist beispielhaft dargestellt, wie der Vergleich zwischen von einem Sensorsystem des Fahrzeugs 10 erfassten Umfeldinformationen und den charakteristischen Umfeldinformationen einer Zielposition vorgenommen werden kann, wobei die Umfeldinformationen jeweils in Form von Bilddaten 110 und 150 vorliegen. Die Zielposition kann durch ein sogenanntes "Matching" der charakteristischen Umfeldinformationen 110 der Zielposition 20 (Zielfoto) mit den aktuell erfassten Umfeldinformationen 150 der Bilderfassungsvorrichtung 14 des Fahrzeugs 10, also dem aktuell erfassten Umgebungsbild, erfolgen. Unter "Matching" wird dabei ein Maß der Übereinstimmung der Umfeldinformationen 110 und 150 verstanden. Dabei wird beispielsweise das Umgebungsbild 150 schrittweise in x- und y-Richtung mit dem Zielfoto 110 zur Deckung gebracht und für jede Koordinate (x, y) ein Maß für das "Matching" gebildet. Möglicherweise muss dazu das Umgebungsbild 150 und/oder das Zielfoto 110 abhängig von der relativen Position des Fahrzeugs 10 zum Ort an dem das Zielfoto 110 aufgenommen wurde, einer Bildtransformation unterzogen werden, wie beispielshaft in 180-180'" dargestellt. Dazu kann beispielsweise eine GPS-Information mit dem Zielfoto 110 übertragen werden. Das Maß für die Übereinstimmung kann zum Beispiel durch Bilden der Quadratsumme über alle Pixelhelligkeitsdifferenzen zwischen den Bildern 110 und 150 an jeder Position x,y erfolgen. Alternativ können beispielsweise auch Farbwerte berücksichtigt werden. Das sich ergebende Maß für das "Matching" bzw. für die Übereinstimmung wird in einer Karte 130 eingetragen. Die Koordinaten x_{B}, y_{B} des Maximums der Übereinstimmung, also des besten "Matchings", 170 gibt die Richtung der Zielposition x_{Z}, y_{Z} an. Der Abstand des Fahrzeugs 10 zur Zielposition 20 kann beispielsweise anhand der Annahmen der Position der Horizontlinie im Bild 110 ermittelt werden. Dazu wird der Umstand genutzt, dass die Position der Kamera im Fahrzeug bekannt ist (Höhe über dem Boden, Position im Fahrzeug). Ebenso ist die Bildverzerrung aufgrund des Kameraobjektivs bekannt. In der Verarbeitungsvorrichtung ist darauf aufbauend eine Matrix hinterlegt, welche für jeden Bildpunkt eine Position relativ zum Fahrzeug abbildet. Diese Koordinate ist genau dann gültig, wenn dieser Bildpunkt tatsächlich den Boden abbildet. Mittels Kantenerkennung wird nun nach den Fußpunkten der Objekte im Bild gesucht (beispielsweise wird mittels Hough-Transformation nach waagrechten und senkrechten Linienstücken gesucht. Die am weitesten unten im Bild befindlichen waagrechten Linien werden als Fußpunkte angenommen). Die Koordinaten (Pixel) der Fußpunkte werden dem Boden zugeordnet. Für diese Bildpunkte ist dann anhand der Matrix die Position relativ zum Fahrzeug bekannt.

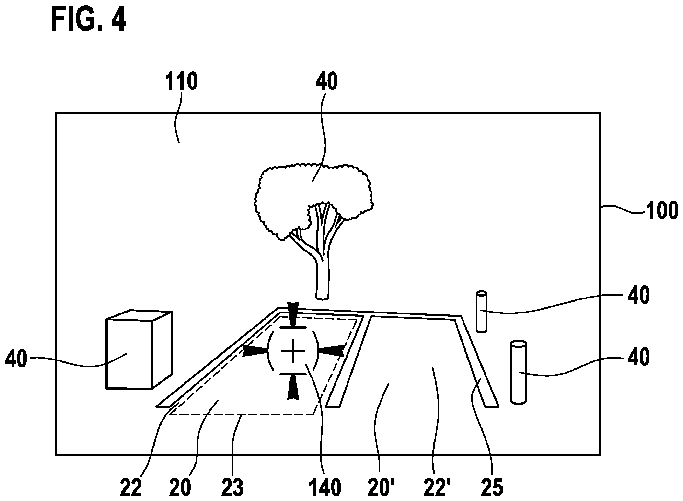

In Figur 4 ist eine bevorzugte Ausführung der Erfindung verdeutlicht, bei der die Festlegung der Zielposition 20 auf einem die charakteristischen Umfeldinformationen 110 der Zielposition 20 bildenden Foto teilweise oder vollständig automatisiert durch eine entsprechende Software erfolgt, die auf dem Mobilgerät 55, mit dem die charakteristischen Umfeldinformationen 110 erfasst werden, abläuft. Der Bediener des Mobilgeräts 55 erfasst aktuelle Bildinformationen umfassend Markierungen 25 eines oder mehrerer Parkplätze 22, 22'. Anhand einer Linienerkennung, z.B. mittels der bekannten Houghtranformation des ortsabgeleiteten Bilds, ermittelt die Software mehrere mögliche Zielpositionen 20, 20'. Der Bediener wählt eine gewünschte Parkposition 22 aus, beispielsweise durch Antippen des Bildschirms 100, oder durch Ausrichten des Mobilgeräts 55 und damit der Kamera, bis das Fadenkreuz 140 eindeutig im Bereich des gewünschten Parkplatzes 22 liegt. Daraufhin wird im Bild 110 der erkannte Bereich der Zielposition 20 besonders hervorgehoben, z.B. durch eine überlagerte Liniendarstellung 23 der Parkfläche 22. Diese Auswahl wird der Fahrerassistenzvorrichtung im Fahrzeug als Zielposition 20 übermittelt, woraufhin das Fahrzeug 10, wie zuvor beschrieben autonom an die gewünschte Zielposition 20 fährt.

## Patentansprüche

1. Verfahren zur Durchführung eines autonomen Parkvorgangs eines Fahrzeugs (10), wobei zwischen einem Mobilgerät (55) eines sich innerhalb oder außerhalb des Fahrzeugs (10) befindenden Bedieners (50) und dem Fahrzeug (10) eine Kommunikationsverbindung aufgebaut wird, durch welche zumindest ein Befehl zur Aktivierung des autonomen Parkvorgangs des Fahrzeugs (10) übertragen wird, wobei sich das Fahrzeug (10) nach der Aktivierung des autonomen Parkvorgangs autonom von einer Startposition zu einer Zielposition (20) bewegt, **dadurch gekennzeichnet, dass**
a) vor Beginn des autonomen Parkvorgangs des Fahrzeugs (10) charakteristische Umfeldinformationen (110) der Zielposition (20) über die Kommunikationsverbindung an das Fahrzeug (10) gesendet und in einer hierfür geeigneten Vorrichtung (12) gespeichert werden,
b) vor und/oder während des autonomen Parkvorgangs ein Vergleich zwischen von einem Sensorsystem (14) des Fahrzeugs (10) erfassten aktuellen Umfeldinformationen (150) und den charakteristischen Umfeldinformationen (110) der Zielposition (20) erfolgt und eine Trajektorie (60) des autonomen Parkvorgangs abhängig von dem Vergleich berechnet wird,
wobei die charakteristischen Umfeldinformationen (110) der Zielposition (20) ein digitales Bild, insbesondere eine digitale Fotographie der Zielposition (20) umfassen, und dass die charakteristischen Umfeldinformationen der Zielposition (20) die GPS-Koordinaten der Zielposition und/oder die GPS-Koordinaten der Position an der das digitale Bild der Zielposition aufgenommen wurde, umfassen.

2. Verfahren nach Anspruch 1, **dadurch gekennzeichnet, dass** das Sensorsystem (14) zur Erfassung der Umfeldinformationen (150) des Fahrzeugs (10) einen Bildsensor, insbesondere eine Digitalkamera umfasst.

3. Verfahren nach einem der Ansprüche 1 oder 2, **dadurch gekennzeichnet, dass** die charakteristischen Umfeldinformationen (110) der Zielposition (20) von dem Bediener (50) mittels eines Mobilgeräts (55) erfasst werden und an das Fahrzeug (10) über die Kommunikationsverbindung übermittelt werden.

4. Verfahren nach Anspruch 1, **dadurch gekennzeichnet, dass** die GPS-Koordinaten der Position an der das digitale Bild (110) der Zielposition (20) aufgenommen wurde relativ zu den GPS-Koordinaten des Fahrzeugs (10) ermittelt wird und abhängig von der Relativposition eine Bildtransformation zwischen dem digitalen Bild (110) der Zielposition und dem von dem Sensorsystem (14) des Fahrzeugs erfassten Bild (150) der Umgebung durchgeführt wird.

5. Verfahren nach einem der Ansprüche 1 bis 4, **dadurch gekennzeichnet, dass** aus den von dem Sensorsystem (14) des Fahrzeugs (10) erfassten Umfeldinformationen (150) und/oder aus von einem zweiten Sensorsystem (16), insbesondere einem Ultraschallsensorsystem, erfassten Umfeldinformationen auf Hindernisse (40) im Umfeld des Fahrzeugs (10) geschlossen wird und eine mögliche Kollision des Fahrzeugs (10) mit einem Hindernis erkannt wird, wobei der autonome Parkvorgang unterbrochen oder pausiert oder die Trajektorie (60) angepasst wird um eine Kollision des Fahrzeugs (10) mit dem Hindernis zu vermeiden.

6. Verfahren nach einem der Ansprüche 3 bis 5, **dadurch gekennzeichnet, dass** die charakteristischen Umfeldinformationen (110) der Zielposition auf einer Anzeigevorrichtung des Fahrzeugs (10) und/oder auf einer Anzeigevorrichtung des Mobilgeräts (55) angezeigt wird.

7. Fahrerassistenzvorrichtung, die mit Steuer- und Sensoreinrichtungen eines Fahrzeugs verbindbar ist, **dadurch gekennzeichnet, dass** die Fahrzeugassistenzvorrichtung dazu eingerichtet ist, eines der Verfahren nach den Ansprüche 1 bis 6 durchzuführen.

8. Fahrzeug mit einer Fahrerassistenzvorrichtung nach Anspruch 7.

## Claims

1. Method for carrying out an autonomous parking operation of a vehicle (10), a communication connection being set up between a mobile device (55) of an operator (50) inside or outside the vehicle (10) and the vehicle (10) and being used to transmit at least one command for activating the autonomous parking operation of the vehicle (10), the vehicle (10) autonomously moving from a starting position to a target position (20) after the activation of the autonomous parking operation, **characterized in that**
a) before starting the autonomous parking operation of the vehicle (10), characteristic environmental information (110) relating to the target position (20) is transmitted to the vehicle (10) via the communication connection and is stored in an apparatus (12) suitable for this purpose,
b) before and/or during the autonomous parking operation, current environmental information (150) captured by a sensor system (14) of the vehicle (10) and the characteristic environmental information (110) relating to the target position (20) is compared and a trajectory (60) of the autonomous parking operation is calculated on the basis of the comparison,
the characteristic environmental information (110) relating to the target position (20) comprising a digital image, in particular a digital photograph of the target position (20), and **in that** the characteristic environmental information relating to the target position (20) comprises the GPS coordinates of the target position and/or the GPS coordinates of the position at which the digital image of the target position was recorded.

2. Method according to Claim 1, **characterized in that** the sensor system (14) comprises an image sensor, in particular a digital camera, for capturing the environmental information (150) relating to the vehicle (10).

3. Method according to either of Claims 1 and 2, **characterized in that** the characteristic environmental information (110) relating to the target position (20) is captured by the operator (50) by means of a mobile device (55) and is transmitted to the vehicle (10) via the communication connection.

4. Method according to Claim 1, **characterized in that** the GPS coordinates of the position at which the digital image (110) of the target position (20) was recorded are determined relative to the GPS coordinates of the vehicle (10) and an image transformation between the digital image (110) of the target position and the image (150) of the environment captured by the sensor system (14) of the vehicle is carried out on the basis of the relative position.

5. Method according to one of Claims 1 to 4, **characterized in that** obstacles (40) in the environment of the vehicle (10) are inferred from the environmental information (150) captured by the sensor system (14) of the vehicle (10) and/or from environmental information captured by a second sensor system (16), in particular an ultrasonic sensor system, and a possible collision between the vehicle (10) and an obstacle is identified, the autonomous parking operation being interrupted or paused and the trajectory (60) being adapted in order to avoid a collision between the vehicle (10) and the obstacle.

6. Method according to one of Claims 3 to 5, **characterized in that** the characteristic environmental information (110) relating to the target position is displayed on a display apparatus of the vehicle (10) and/or on a display apparatus of the mobile device (55).

7. Driver assistance apparatus which can be connected to control and sensor devices of a vehicle, **characterized in that** the vehicle assistance apparatus is set up to carry out one of the methods according to Claims 1 to 6.

8. Vehicle having a driver assistance apparatus according to Claim 7.

## Revendications

1. Procédé pour effectuer un processus de stationnement autonome d'un véhicule (10), dans lequel une liaison de communication est établie entre un dispositif mobile (55) d'un opérateur (50) se trouvant à l'intérieur ou à l'extérieur du véhicule (10), et le véhicule (10), laquelle liaison permet de transmettre au moins une instruction d'activation du processus de stationnement autonome du véhicule (10), dans lequel le véhicule (10) se déplace de manière autonome après l'activation du processus de stationnement autonome d'une position de départ à une position cible (20), **caractérisé en ce que**
a) des informations d'environnement caractéristiques (110) de la position cible (20) sont envoyées au véhicule (10) par l'intermédiaire de la liaison de communication et mémorisées dans un dispositif (12) approprié avant le début du processus de stationnement autonome du véhicule (10),
b) une comparaison entre des informations d'environnement (150) actuelles détectées par un système de capteur (14) du véhicule (10) et les informations d'environnement caractéristiques (110) de la position cible (20) est effectuée avant et/ou pendant le processus de stationnement autonome et une trajectoire (60) du processus de stationnement autonome est calculée en fonction de la comparaison, dans lequel les informations d'environnement caractéristiques (110) de la position cible (20) comprennent une image numérique, notamment une photographie numérique de la position cible (20), et les informations d'environnement caractéristiques de la position cible (20) comprennent les coordonnées GPS de la position cible et/ou les coordonnées GPS de la position à laquelle l'image numérique de la position cible a été acquise.

2. Procédé selon la revendication 1, **caractérisé en ce que** le système de capteur (14) comprend un capteur d'image, notamment une caméra numérique, destiné à détecter les informations d'environnement (150) du véhicule (10).

3. Procédé selon l'une quelconque des revendications 1 ou 2, **caractérisé en ce que** les informations d'environnement caractéristiques (110) de la position cible (20) sont détectées par l'opérateur (50) au moyen d'un dispositif mobile (55) et sont transmises au véhicule (10) par l'intermédiaire de la liaison de communication.

4. Procédé selon la revendication 1, **caractérisé en ce que** les coordonnées GPS de la position à laquelle l'image numérique (110) de la position cible (20) a été acquise sont déterminées par rapport aux coordonnées GPS du véhicule (10) et **en ce qu'**une transformation d'image entre l'image numérique (110) de la position cible et l'image (150) de l'environnement, détectée par le système de capteur (14) du véhicule, est effectuée en fonction de la position relative.

5. Procédé selon l'une quelconque des revendications 1 à 4, **caractérisé en ce qu'**une conclusion est établie quant à la présence d'obstacles (40) dans l'environnement du véhicule (10) à partir des informations d'environnement (150) détectées par le système de capteur (14) du véhicule (10) et/ou à partir d'informations d'environnement détectées par un second système de capteur (16), notamment par un système de capteurs à ultrasons, et **en ce qu'**une collision possible entre le véhicule (10) et un obstacle est détectée, dans lequel le processus de stationnement autonome est interrompu ou suspendu ou la trajectoire (60) est adaptée afin d'éviter une collision entre le véhicule (10) et l'obstacle.

6. Procédé selon l'une quelconque des revendications 3 à 5, **caractérisé en ce que** les informations d'environnement caractéristiques (110) de la position cible sont affichées sur un dispositif d'affichage du véhicule (10) et/ou sur un dispositif d'affichage du dispositif mobile (55).

7. Dispositif d'assistance au conducteur pouvant être relié à des moyens de commande et de détection d'un véhicule, **caractérisé en ce que** le dispositif d'assistance au véhicule est conçu pour mettre en oeuvre un procédé selon les revendications 1 à 6.

8. Véhicule équipé d'un dispositif d'assistance au conducteur selon la revendication 7.
